# EUROPÄISCHE PATENTSCHRIFT

(11) **EP 4 176 770 B1**
(45) Veröffentlichungstag und Bekanntmachung des Hinweises auf die Patenterteilung: **29.05.2024**
(21) Anmeldenummer: 21206471.1
(22) Anmeldetag: 04.11.2021
(51) Int. Cl.: A47B 88/457

(54) **ANTRIEBSSYSTEM FÜR EINE LINEAR BEWEGTE AUSZIEHBARE MÖBELKOMPONENTE**
DRIVE SYSTEM FOR A FURNITURE COMPONENT WHICH CAN BE PULLED OUT LINEARLY
SYSTÈME D'ENTRAÎNEMENT POUR UN COMPOSANT DE MEUBLE DÉPLACÉ LINÉAIREMENT

(43) Veröffentlichungstag der Anmeldung: 10.05.2023
(73) Patentinhaber: maxon international ag, 6072 Sachseln (CH)
(72) Erfinder: von Lehmann, Ernst, 79286 Glottertal (DE); Mamier, Matthias, 79361 Sasbach (DE); Schneider, Benjamin, 79312 Emmendingen (DE)
(74) Vertreter: Grünecker Patent- und Rechtsanwälte PartG mbB

(56) Entgegenhaltungen:
- WO-A1-2008/049141
- US-A1- 2020 345 139

## Beschreibung

Die vorliegende Erfindung bezieht sich auf ein Antriebssystem für eine linear bewegte ausziehbare Möbelkomponente eines Möbelstücks, insbesondere für eine ausziehbare Schublade eines Apothekerschranks, gemäß dem Oberbegriff des unabhängigen Anspruchs 1.

Ein Antriebssystem nach dem Oberbegriff des unabhängigen Anspruchs 1 weist dabei eine stationäre Komponente, welche an dem Möbelstück befestigbar ist, einen Antriebsmotor und eine gegenüber der stationären Komponente in einer Ausziehrichtung linear bewegliche Schiene auf, welche an einer ersten Seite der Schiene eine drehbar gelagerte erste Umlenkrolle und an einer zweiten Seite der Schiene eine drehbar gelagerte zweite Umlenkrolle aufweist, wobei ein erstes Zugmittel, das an der stationären Komponente befestigt ist, derart um die erste Umlenkrolle und die zweite Umlenkrolle gelegt ist und mit einer vom Antriebsmotor antreibbaren Abtriebswelle in Kontakt ist, dass die Schiene in Ausziehrichtung durch den Antriebsmotor bewegbar ist.

Ein Antriebssystem nach dem Oberbegriff des unabhängigen Anspruchs 1 ist aus der US 202000345139 A1 bekannt. Dabei ist das erste Zugmittel ein Zahnriemen und ist neben der stationären Komponente auch noch an einer Ausziehschiene befestigt, die an der Möbelkomponente befestigbar ist und linear beweglich zur Schiene gelagert ist. Die erste Umlenkrolle ist hierbei als Zahnrad ausgeführt und bildet gleichzeitig die Abtriebswelle des an der Schiene befestigten Antriebsmotors. Dadurch ergibt sich ein zweistufiger Teleskopantrieb, durch den die Ausziehschiene um die doppelte Distanz verglichen mit der Schiene zur stationären Komponente bewegt werden kann. Dadurch kann das Antriebssystem weiter vorne im Möbelstück angeordnet werden und trotzdem ein komplettes Ausfahren der Möbelkomponente gewährleistet werden. Allerdings gestaltet sich insbesondere der Anschluss des Antriebssystems aufgrund des mitbewegten Antriebmotors als schwierig, sodass die Montage erschwert wird und ein Nachrüsten von Antrieben aufwendig ist.

Die Aufgabe der vorliegenden Erfindung besteht daher darin, ein Antriebssystem gemäß dem Oberbegriff des unabhängigen Anspruchs 1 bereitzustellen, das einfacher und ohne besondere Vorkenntnisse zu montieren und gegebenenfalls nachzurüsten ist und gleichzeitig ein komplettes Ausfahren gewährleistet. Außerdem soll das Antriebssystem möglichst kompakt, leise, leistungsstark und preiswert sein und gleichzeitig geltende Sicherheitsstandards, welche beispielsweise vom TÜV vorgegeben werden, erfüllen.

Die Aufgabe wird durch die Merkmale des unabhängigen Anspruchs 1 gelöst. Demnach wird bei einem gattungsgemäßen Antriebssystem die Aufgabe erfindungsgemäß dadurch gelöst, dass der Antriebsmotor an der stationären Komponente befestigt ist und die Schiene an der ersten Seite eine drehbar gelagerte dritte Umlenkrolle und an der zweiten Seite eine drehbar gelagerte vierte Umlenkrolle aufweist, um die ein zweites Zugmittel derart angeordnet ist, dass eine Bewegung der Schiene in der Ausziehrichtung eine Bewegung des zweiten Zugmittels relativ zur Schiene in der Ausziehrichtung bedingt, wobei das zweite Zugmittel mit der linear bewegten ausziehbaren Möbelkomponente koppelbar ist.

Durch die erfindungsgemäße Lösung kann das Antriebssystem sehr einfach montiert oder nachgerüstet werden. Die stationäre Komponente kann sehr weit vorne in einem Möbelstück ohne einen schwierigen Anschluss des Antriebsmotors montiert werden. Gleichzeitig kann eine ausziehbare Möbelkomponente vollständig ausgefahren werden. Dabei kann durch die erzeugte zweistufige Bewegung die Gesamtlänge des Antriebssystems trotzdem reduziert werden und ein Antriebssystem mit einer Schienenlänge kann für mehrere Tiefen der ausziehbaren Möbelkomponente verwendet werden. Außerdem kann durch die Verwendung eines zweiten Zugmittels, das mit der ausziehbaren Möbelkomponente koppelbar ist, das Antriebssystem auch verschiedene horizontale oder vertikale Lagen der ausziehbaren Möbelkomponente aufgrund von unterschiedlichen Positionen oder Beladungszuständen der Möbelkomponente ausgleichen und die Höheneinstellung des Antriebssystems zur ausziehbaren Möbelkomponente hat eine größere Toleranz. Hierbei ist klarzustellen, dass das erfinderische Antriebssystem nur zur Bewegung der ausziehbaren Möbelkomponente und nicht zur Führung und somit der Aufnahme der Gewichtslast der Möbelkomponente genutzt werden soll.

Erfindungsgemäß können das erste Zugmittel und das zweite Zugmittel als Zahnriemen, Ketten, Seile oder eine Kombination der genannten Zugmittel ausgebildet sein.

Vorteilhafte Ausgestaltungen der vorliegenden Erfindung sind Gegenstand der Unteransprüche.

In einer besonders bevorzugten Ausführungsform der vorliegenden Erfindung ist die erste Umlenkrolle am Ende der ersten Seite der Schiene drehbar gelagert und/oder die zweite Umlenkrolle am Ende der zweiten Seite der Schiene drehbar gelagert und/oder die dritte Umlenkrolle am Ende der ersten Seite der Schiene drehbar gelagert und/oder die vierte Umlenkrolle am Ende der zweiten Seite der Schiene drehbar gelagert.

Die erste Umlenkrolle und die dritte Umlenkrolle sind in Bezug auf die stationäre Komponente auf einer ersten Seite der Schiene angeordnet, wobei die zweite Umlenkrolle und die vierte Umlenkrolle in Bezug auf die stationäre Komponente auf einer gegenüberliegenden zweiten Seite der Schiene angeordnet sind. Die erste Umlenkrolle und die zweite Umlenkrolle müssen dabei auf der Schiene einen Abstand zueinander aufweisen, der größer als die Summe der Breite der stationären Komponente und des Durchmessers der ersten und zweiten Umlenkrollen ist. Gleiches gilt für die dritte Umlenkrolle und vierte Umlenkrolle. Um einen möglichst gossen Fahrweg durch das Antriebssystem für die ausziehbare Möbelkomponente zu erreichen, sind die Umlenkrollen im Endbereich oder am Ende der Schiene angeordnet. Um beispielsweise für verschieden lange ausziehbare Möbelkomponenten einheitlich lange Schienen verwenden zu können, können die Umlenkrollen bei kurzen ausziehbaren Möbelkomponenten näher an der stationären Komponente befestigt werden als bei langen ausziehbaren Möbelkomponenten.

Dazu kann auch zumindest die erste Umlenkrolle am Ende der ersten Seite der Schiene drehbar gelagert sein und die zweite Umlenkrolle am Ende der zweiten Seite der Schiene drehbar gelagert sein. Weiter kann die dritte Umlenkrolle am Ende der ersten Seite der Schiene drehbar gelagert sein und kann die vierte Umlenkrolle am Ende der zweiten Seite der Schiene drehbar gelagert sein.

In einer weiteren bevorzugten Ausführungsform der vorliegenden Erfindung ist das zweite Zugmittel an der stationären Komponente befestigt. Dadurch kann die durch die Bewegung der Schiene bedingte Bewegung des zweiten Zugmittels relativ zur Schiene in der Ausziehrichtung besonders einfach und kostengünstig bedingt werden.

Gemäß einer anderen bevorzugten Ausführungsform der Erfindung ist neben der Abtriebswelle zumindest eine drehbar gelagerte erste Spannrolle an der stationären Komponente angeordnet, wobei das erste Zugmittel derart um die erste Spannrolle und die Abtriebswelle gelegt ist, dass die Bewegung der Abtriebswelle ohne Schlupf auf das erste Zugmittel übertragbar ist. Dadurch kann sichergestellt werden, dass die Bewegung der Abtriebswelle auf das erste Zugmittel und damit auf die Schiene vollständig übertragen werden kann.

Vorteilhafterweise ist die Position der ersten Spannrolle zur Abtriebswelle einstellbar. In dem die Position der ersten Spannrolle zur Abtriebswelle einstellbar ist, kann hierbei noch eine Feinjustierung erfolgen.

Besonders bevorzugt ist neben der ersten Spannrolle eine drehbar gelagerte zweite Spannrolle an der stationären Komponente angeordnet, wobei das erste Zugmittel schleifenförmig entlang der ersten Spannrolle, um die Abtriebswelle und entlang der zweiten Spannrolle angeordnet ist. Das heißt, dass das erste Zugmittel erst entlang der ersten Spannrolle, dann zwischen der ersten Spannrolle und der Abtriebswelle, dann um die Abtriebswelle, dann zwischen der Abtriebswelle und der zweiten Spannrolle und schließlich entlang der zweiten Spannrolle verläuft. Durch die zweite Spannrolle wird der Winkel der Umschlingung des ersten Zugmittels um die Abtriebswelle erhöht. Dadurch kann eine höhere Kraft von der Abtriebswelle auf das erste Zugmittel übertragen werden, wodurch eine höhere Zugkraft in beiden Richtungen gleichermaßen erreicht wird.

Dadurch wird die Übertragung der Bewegung der Abtriebswelle auch bei hohen Gewichten der Möbelkomponente gewährleistet.

In einer anderen bevorzugten Ausführungsform der vorliegenden Erfindung ist die Abtriebswelle über ein Getriebe durch den Antriebsmotor angetrieben, wobei der Antriebsmotor ein Elektromotor ist. Durch die Verwendung eines Getriebes und eines Elektromotors kann ein ausreichend hohes Drehmoment auch für schwere Möbelkomponenten gewährleistet werden. Der Elektromotor ist dabei sehr kompakt, leise und kann in der stationären Form auch gut von Leihen angeschlossen werden. Durch die erfindungsgemäße Verwendung eines ersten Zugmittels und zweiten Zugmittels benötigt das Getriebe auch keine höhere Umsetzung.

In einer weiteren bevorzugten Ausführungsform der vorliegenden Erfindung ist das erste Zugmittel ein Zahnriemen und die Abtriebswelle weist ein Zahnrad auf, wobei der Zahnriemen mit dem Zahnrad in Eingriff steht. Dadurch kann die Kraftübertragung von der Abtriebswelle auf das erste Zugmittel noch weiter verbessert werden.

Gemäß einer weiteren besonders bevorzugten Ausführungsform der vorliegenden Erfindung sind die erste Umlenkrolle und die dritte Umlenkrolle an der ersten Seite der Schiene sowie die zweite Umlenkrolle und die vierte Umlenkrolle an der zweiten Seite der Schiene jeweils koaxial angeordnet. Dadurch kann ein besonders kompakter Aufbau des Antriebssystems erreicht werden. Gleichzeitig können Teile eingespart werden, da zum Beispiel eine gemeinsame Drehachse für zwei Umlenkrollen verwendet werden kann. Gleichzeitig kann bei kompakter Bauweise ein größtmöglicher Auszugsweg bzw. Fahrweg für die linear bewegte ausziehbare Möbelkomponente erreicht werden.

Vorzugsweise sind die erste Umlenkrolle und die dritte Umlenkrolle sowie die zweite Umlenkrolle und die vierte Umlenkrolle jeweils unabhängig voneinander drehbar gelagert. Auch dies vereinfacht den Aufbau des Antriebssystems und ermöglicht eine effiziente Kraftübertragung. Bei unterschiedlichen Rollendurchmessern ist eine getrennte Lagerung notwendig. Bei gleichem Durchmesser von erster und dritter Umlenkrolle sowie zweiter und vierter Umlenkrolle, können je die erste und dritte Umlenkrolle sowie die zweite und vierte Umlenkrolle eine gemeinsame Lagerung aufweisen.

In einer anderen bevorzugten Ausführungsform der vorliegenden Erfindung ragen Umfänge der dritten Umlenkrolle und der vierten Umlenkrolle über die Schiene und die stationäre Komponente hinaus. Derart kann ein besonders einfacher und effizienter horizontaler und vertikaler Höhenausgleich an einer Stelle des zweiten Zugmittels, an der das zweite Zugmittel mit der ausziehbaren Möbelkomponente koppelbar ist, ermöglicht werden, sodass die unterschiedlichen Positionen und Beladungszustände der Möbelkomponente das Antriebssystem nicht negativ beeinflussen.

Vorzugsweise sind die erste Umlenkrolle und die zweite Umlenkrolle mit einem kleineren Umfang als die dritte Umlenkrolle und die vierte Umlenkrolle ausgebildet.

In einer weiteren besonders bevorzugten Ausführungsform der vorliegenden Erfindung weist die stationäre Komponente ein Spannelement auf, mit dem die Spannung des zweiten Zugmittels einstellbar ist. Damit kann die durch die Bewegung der Schiene erzeugte Bewegung des zweiten Zugmittels ohne Spiel an die anbringbare Möbelkomponente übertragen werden. Vorzugsweise ist das Spannelement gut zugänglich an der stationären Komponente platziert. Dadurch kann die Montage vereinfacht werden.

In einer besonders bevorzugten Ausführungsform der vorliegenden Erfindung weist die stationäre Komponente einen Schlitten auf, wobei zumindest ein Ende des zweiten Zugmittels an dem Schlitten angebracht ist und wobei neben der Spannung des zweiten Zugmittels auch die Position des Schlittens über das Spannelement einstellbar ist, wobei eine Aufhängung der ersten Spannrolle derart an dem Schlitten angeordnet ist, dass über die Position des Schlittens die Position der ersten Spannrolle einstellbar ist, wobei dadurch der Anpressdruck des ersten Zugmittels auf die Abtriebswelle einstellbar ist und dadurch das Spiel des ersten Zugmittels und des zweiten Zugmittels reduzierbar ist. Damit kann über einen gut zugänglichen Mechanismus das Spiel des ersten und des zweiten Zugmittels herausgenommen werden, sodass eine vorteilhafte Übertragung der Kraft des Antriebsmotors über das erste Zugmittel und das zweite Zugmittel auf die anbringbare Möbelkomponente erfolgt.

In einer weiteren bevorzugten Ausführungsform der vorliegenden Erfindung ist das zweite Zugmittel ein Seil. Dadurch kann der horizontale und vertikale Höhenausgleich in Bezug auf unterschiedliche Positionen und Beladungszustände der Möbelkomponente besonders vorteilhaft umgesetzt werden.

Bevorzugter Weise ist ein Kopplungselement an dem zweiten Zugmittel angebracht, das mit der linear bewegten ausziehbaren Möbelkomponente koppelbar ist. Dadurch kann die Kopplung besonders stabil und zuverlässig umgesetzt werden. Ferner kann das Kopplungselement an verschiedenen Positionen auf dem zweiten Zugmittel oder an verschiedenen Positionen an der linear bewegten ausziehbaren Möbelkomponente fixiert werden.

Nachfolgend wird ein Ausführungsbeispiel der vorliegenden Erfindung anhand von Zeichnungen näher erläutert.

In den Zeichnungen zeigen:
- Figur 1a, b:: Draufsichten auf ein Ausführungsbeispiel eines erfindungsgemäßen Antriebssystems in einem Möbelstück und an eine ausziehbare Möbelkomponente gekoppelt in einer eingefahrenen und ausgefahrenen Position der Möbelkomponente,
- Figur 2:: einen vertikalen Schnitt durch das in Figur 1 gezeigte Ausführungsbeispiel des Antriebssystems in der Ebene des zweiten Zugmittels,
- Figur 3:: perspektivische Ansicht auf das in Figur 1 gezeigte Ausführungsbeispiel des Antriebssystems von der Rückseite und ohne Abdeckung des Antriebsmotors und Getriebes,
- Figur 4:: perspektivische Detaileinsicht auf einen vertikalen Schnitt durch das in Figur 1 gezeigte Ausführungsbeispiel des Antriebssystems in der Ebene des zweiten Zugmittels,
- Figur 5:: perspektivische Detaileinsicht auf einen vertikalen Schnitt durch das in Figur 1 gezeigte Ausführungsbeispiel des Antriebssystems in der Ebene des ersten Zugmittels,
- Figur 6:: perspektivische Detailansicht auf einen vertikalen, senkrecht zur Ausziehrichtung angeordneten Schnitt durch die zweite Umlenkrolle, die vierte Umlenkrolle und die Schiene des in Figur 1 gezeigten Ausführungsbeispiels des Antriebssystems.

In den folgenden Abbildungen sind gleiche Teile mit gleichen Bezugszeichen versehen. Sofern eine Figur Bezugszeichen enthält, auf die in der zugehörigen Figurenbeschreibung nicht explizit eingegangen wird, wird auf vorherige oder nachfolgende Figurenbeschreibungen verwiesen.

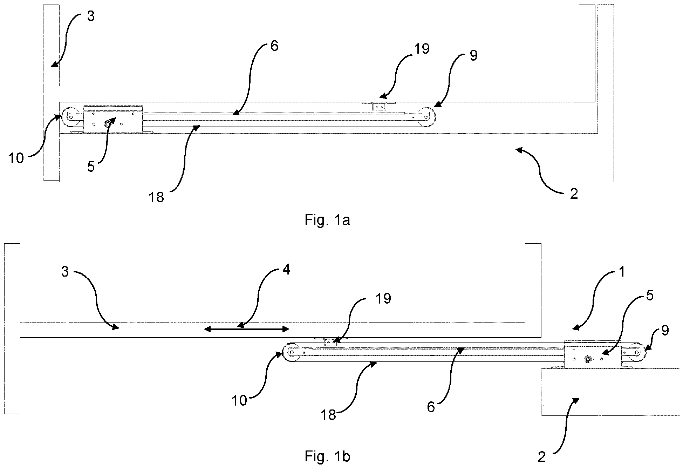

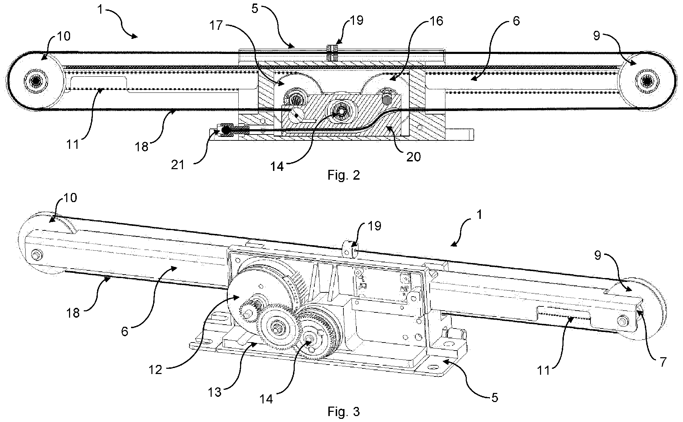

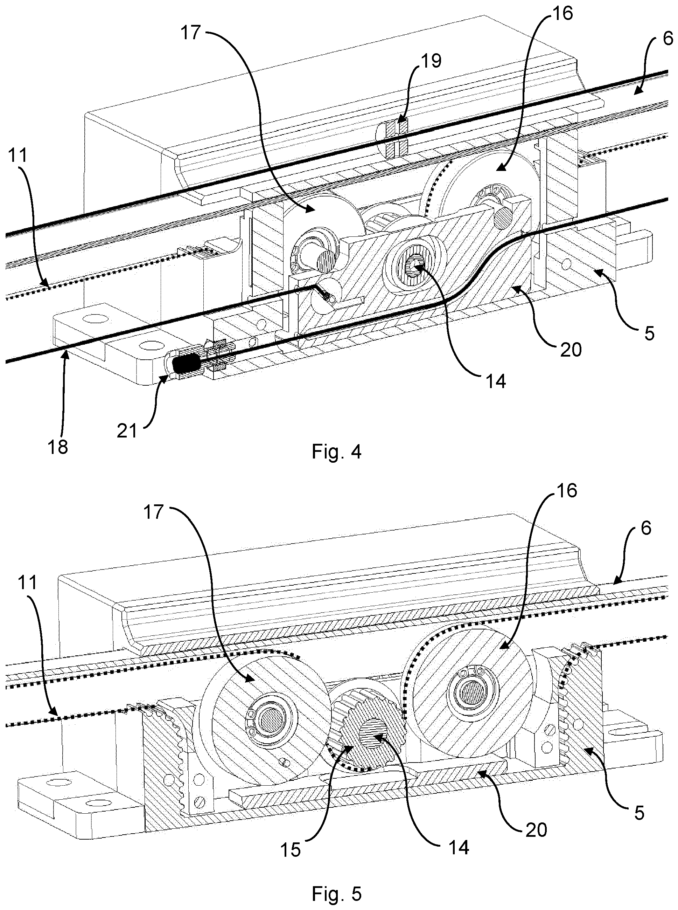

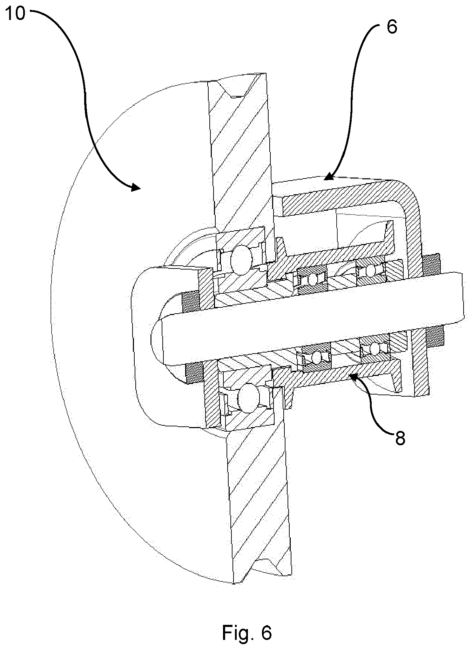

Die Figuren 1 bis 6 zeigen ein Ausführungsbeispiel eines erfindungsgemäßen Antriebssystems 1, wobei die Figuren 1a und b das Antriebssystem 1 im Zusammenspiel mit einem Möbelstück 2 und einer linear ausziehbaren Möbelkomponente 3 zeigen. Dabei zeigt Figur 1a das Antriebssystem 1 und die ausziehbare Möbelkomponente 3 in einer eingefahrenen Position und Figur 1b das Antriebssystem 1 und die ausziehbare Möbelkomponente 3 in einer ausgefahrenen Position, wobei die ausziehbare Möbelkomponente 3 durch das Antriebssystem 1 vollständig in einer Ausziehrichtung 4 aus dem Möbelstück 2 gefahren werden kann. Die ausziehbare Möbelkomponente kann zum Beispiel eine ausziehbare Schublade beispielsweise eines Apothekerschranks oder eine Tischplatte oder eine Ablagefläche sein. Es ist nochmals anzumerken, dass das Antriebssystem 1 nur zur Bewegung der ausziehbaren Möbelkomponente 3 und nicht zur Führung und somit der Aufnahme der Gewichtslast der ausziehbaren Möbelkomponente 3 genutzt werden soll. Etwaige Führungsschienen zum Zweck der Führung beziehungsweise Gewichtslastaufnahme sind in den Figuren nicht gezeigt.

Das in den Figuren gezeigte erfindungsgemäße Ausführungsbeispiel des Antriebssystems 1 weist unteranderem eine stationäre Komponente 5 auf, die an das Möbelstück 2 beispielsweise angeschraubt werden kann. An der stationären Komponente 5 ist eine in Ausziehrichtung 4 linear bewegliche Schiene 6 gelagert. An einer ersten Seite der Schiene 6 sind in einem Endbereich eine erste Umlenkrolle 7 und eine dritte Umlenkrolle 9 koaxial und drehbar gelagert angeordnet. An einer zweiten Seite der Schiene 6 sind in einem Endbereich eine zweite Umlenkrolle 8 und eine vierte Umlenkrolle 10 koaxial und drehbar gelagert angeordnet. Die erste Seite der Schiene 6 ist in Bezug zur stationären Komponente 5 auf der einen Seite der stationären Komponente 5 angeordnet, wobei sich die zweite Seite der Schiene 6 auf der anderen Seite der stationären Komponente 5 befindet. Die erste Umlenkrolle 7 und zweite Umlenkrolle 8 können auf der jeweiligen Seite im Endbereich oder am Ende der Schiene 6 angeordnet sein. Die erste Umlenkrolle 7 und die zweite Umlenkrolle 8 müssen dabei einen Abstand auf der Schiene 6 haben, der größer als die Summe der Breite der stationären Komponente 5 und des Durchmessers der ersten und zweiten Umlenkrollen 7, 8 ist. Ebenso müssen die dritte und vierte Umlenkrolle 9, 10 einen Abstand auf der Schiene 6 haben, der größer als die Summe der Breite der stationären Komponente 5 und des Durchmessers der dritten und vierten Umlenkrollen 9,10 ist.

Um die erste Umlenkrolle 7 und die zweite Umlenkrolle 8 ist ein erstes Zugmittel 11 - gestrichelte Linie - gelegt, dessen Enden an der stationären Komponente 5 befestigt sind und das in diesem Ausführungsbeispiel als Zahnriemen ausgebildet ist. An der stationären Komponente 5 ist ein Antriebsmotor 12 angeordnet, der über ein Getriebe 13 eine Abtriebswelle 14 antreibt, auf der ein Zahnrad 15 angeordnet ist. Der Antriebsmotor 12 ist als Elektromotor ausgebildet. Auf der einen Seite des Zahnrads 15 der Abtriebswelle 14 ist eine erste Spannrolle 16 auf einem beweglichen Schlitten 20 angeordnet und auf der anderen Seite eine zweite Spannrolle 17 an der stationären Komponente 5 angeordnet. Das erste Zugmittel 11 ist schleifenförmig entlang der ersten Spannrolle 16, um die Abtriebswelle 14 und entlang der zweiten Spannrolle 17 angeordnet, sodass die Zähne des Zahnriemens des ersten Zugmittels 11 in die Zähne des Zahnrads 15 der Abtriebswelle 14 greifen. Dadurch kann die Schiene 6 durch den Antriebsmotor 12 über das erste Zugmittel 11 in der Ausziehrichtung 4 bewegt werden.

Dabei sind um die dritte Umlenkrolle 9 und die vierte Umlenkrolle 10 ein zweites Zugmittel 18 - durchgezogene dicke Linie - gelegt, dessen Enden ebenfalls an der stationären Komponente 5 befestigt sind. Dadurch wird durch eine Bewegung der Schiene 6 in Ausziehrichtung 4 eine Bewegung des zweiten Zugmittels 18 relativ zu Schiene 6 bedingt. An dem zweiten Zugmittel 18 ist dabei ein Kopplungselement 19 angebracht, das mit der ausziehbaren Möbelkomponente 3 koppelbar ist und damit die Bewegung des zweiten Zugmittels 18 in der Ausziehrichtung 4 auf die ausziehbare Möbelkomponente 3 überträgt. Der Umfang der dritten Umlenkrolle 9 und der vierten Umlenkrolle 10 ist dabei größer als der Umfang der ersten und zweiten Umlenkrolle 7, 8 und ragt in der Ebene, in der die dritte und vierte Umlenkrolle 9, 10 liegen, über die Schiene 6 und einseitig über die stationäre Komponente 5 hinaus. Dadurch hat das zweite Zugmittel 18 und insbesondere das Kopplungselement 19 in vertikaler und horizontaler Richtung etwas Freiraum, sodass das Antriebssystem 1 eine Möglichkeit zu einem horizontalen und vertikalen Höhenausgleich des Kopplungselements 19 erreicht und unterschiedliche Positionen und Beladungszustände der ausziehbaren Möbelkomponente 3 das Antriebssystem 1 nicht negativ beeinflussen. In dem gezeigten Ausführungsbeispiel ist das zweite Zugmittel 18 als Seil ausgebildet, wodurch der horizontale und vertikale Höhenausgleich noch verbessert werden kann.

Das gezeigte Ausführungsbeispiel des Antriebssystems 1 weist außerdem einen Spannmechanismus auf, der in einfacher Weise ermöglicht, sowohl das erste Zugmittel 11 und das zweite Zugmittel 18 zu spannen und das Spiel der Zugmittel 11, 18 herauszunehmen. Dazu ist ein in Ausziehrichtung 4 beweglicher Schlitten 20 an der stationären Komponente 5 angeordnet, an dem ein Ende des zweiten Zugmittels 18 befestigt ist. Das andere Ende des zweiten Zugmittel 18 ist an einem Spannelement 21 befestigt, dass ebenfalls an der stationären Komponente 5 angeordnet ist und über das sich die Spannung auf dem zweiten Zugmittel 18 und gleichzeitig die Position des Schlittens 20 einstellen lässt. In diesem Ausführungsbeispiel ist das Spannelement 21 als eine Mutter ausgebildet, die durch Hinein- oder Herausdrehen die Spannung einstellen kann. Gleichzeitig ist die erste Spannrolle 16 an dem Schlitten 20 gelagert, sodass durch die Position des Schlittens 20 auch die Position der ersten Spannrolle 16 einstellbar ist und damit die Spannung des ersten Zugmittels 11 und der Druck der ersten Spannrolle 16 auf das erste Zugmittel 11 an die Abtriebswelle 14 eingestellt werden kann.

Das gezeigte Ausführungsbeispiel des erfindungsgemäßen Antriebssystems 1 ist damit besonders einfach zu montieren, da die stationäre Komponente 5 weit vorne in dem Möbelstück 2 angeordnet werden kann und ein einfacher Anschluss des stationären Antriebsmotors 12 erfolgen kann. Außerdem bedarf es keiner aufwendigen Höheneinstellung des Kopplungselement 19, da ein effizienter vertikaler und horizontaler Höhenausgleich durch das Antriebssystem 1 gegeben ist. Die Justierung des ersten und zweiten Zugmittels 11, 18 für eine effiziente Kraftübertragung kann ebenfalls von Vorne über das Spannelement 21 erfolgen.

### Bezugszeichenliste

- 1: Antriebssystem
- 2: Möbelstück
- 3: ausziehbare Möbelkomponente
- 4: Ausziehrichtung
- 5: stationäre Komponente
- 6: Schiene
- 7: erste Umlenkrolle
- 8: zweite Umlenkrolle
- 9: dritte Umlenkrolle
- 10: vierte Umlenkrolle
- 11: erstes Zugmittel
- 12: Antriebsmotor
- 13: Getriebe
- 14: Abtriebswelle
- 15: Zahnrad
- 16: erste Spannrolle
- 17: zweite Spannrolle
- 18: zweites Zugmittel
- 19: Kopplungselement
- 20: Schlitten
- 21: Spannelement

## Patentansprüche

1. Antriebssystem (1) für eine linear bewegte ausziehbare Möbelkomponente (3) eines Möbelstücks (2), insbesondere für eine ausziehbare Schublade eines Apothekerschranks, wobei das Antriebssystem (1) eine stationäre Komponente (5), welche an dem Möbelstück (2) befestigbar ist, einen Antriebsmotor (12) und eine gegenüber der stationären Komponente (5) in einer Ausziehrichtung (4) linear bewegliche Schiene (6) aufweist, welche an einer ersten Seite der Schiene (6) eine drehbar gelagerte erste Umlenkrolle (7) und an einer zweiten Seite der Schiene (6) eine drehbar gelagerte zweite Umlenkrolle (8) aufweist, wobei ein erstes Zugmittel (11), das an der stationären Komponente (5) befestigt ist, derart um die erste Umlenkrolle (7) und die zweite Umlenkrolle (8) gelegt ist und mit einer vom Antriebsmotor (12) antreibbaren Abtriebswelle (14) in Kontakt ist, dass die Schiene (6) in Ausziehrichtung (4) durch den Antriebsmotor (12) bewegbar ist, **dadurch gekennzeichnet, dass** der Antriebsmotor (12) an der stationären Komponente (5) befestigt ist und die Schiene (6) an der ersten Seite eine drehbar gelagerte dritte Umlenkrolle (9) und an der zweiten Seite eine drehbar gelagerte vierte Umlenkrolle (10) aufweist, um die ein zweites Zugmittel (18) derart angeordnet ist, dass eine Bewegung der Schiene (6) in der Ausziehrichtung (4) eine Bewegung des zweiten Zugmittels (18) relativ zur Schiene (6) in der Ausziehrichtung (4) bedingt, wobei das zweite Zugmittel (18) mit der linear bewegten ausziehbaren Möbelkomponente (3) koppelbar ist.

2. Antriebssystem (1) nach Anspruch 1, **dadurch gekennzeichnet, dass** die erste Umlenkrolle (7) am Ende der ersten Seite der Schiene (6) drehbar gelagert ist und/oder die zweite Umlenkrolle (8) am Ende der zweiten Seite der Schiene (6) drehbar gelagert ist und/oder die dritte Umlenkrolle (9) am Ende der ersten Seite der Schiene (6) drehbar gelagert ist und/oder die vierte Umlenkrolle (10) am Ende der zweiten Seite der Schiene (6) drehbar gelagert ist.

3. Antriebssystem (1) nach Anspruch 1 oder 2, **dadurch gekennzeichnet, dass** das zweite Zugmittel (18) an der stationären Komponente (5) befestigt ist.

4. Antriebssystem (1) nach Anspruch 1 bis 3, **dadurch gekennzeichnet, dass** neben der Abtriebswelle (14) zumindest eine drehbar gelagerte erste Spannrolle (16) an der stationären Komponente (5) angeordnet ist, wobei das erste Zugmittel (11) derart um die erste Spannrolle (16) und die Abtriebswelle (14) gelegt ist, dass die Bewegung der Abtriebswelle (14) ohne Schlupf auf das erste Zugmittel (11) übertragbar ist.

5. Antriebssystem (1) nach Anspruch 3, **dadurch gekennzeichnet, dass** die Position der ersten Spannrolle (16) zur Abtriebswelle (14) einstellbar ist.

6. Antriebssystem (1) nach Anspruch 4 oder 5, **dadurch gekennzeichnet, dass** neben der ersten Spannrolle (16) eine drehbar gelagerte zweite Spannrolle (17) an der stationären Komponente (5) angeordnet ist, wobei das erste Zugmittel (11) schleifenförmig entlang der ersten Spannrolle (16), um die Abtriebswelle (14) und entlang der zweiten Spannrolle (17) angeordnet ist.

7. Antriebssystem (1) nach einem der Ansprüche 1 bis 6, **dadurch gekennzeichnet, dass** die Abtriebswelle (14) über ein Getriebe (13) durch den Antriebsmotor (12) angetrieben ist, wobei der Antriebsmotor (12) ein Elektromotor ist.

8. Antriebssystem (1) nach einem der Ansprüche 1 bis 7, **dadurch gekennzeichnet, dass** das erste Zugmittel (11) ein Zahnriemen ist und die Abtriebswelle (14) ein Zahnrad (15) aufweist, wobei der Zahnriemen mit dem Zahnrad (15) in Eingriff steht.

9. Antriebssystem (1) nach einem der Ansprüche 1 bis 8, **dadurch gekennzeichnet, dass** die erste Umlenkrolle (7) und die dritte Umlenkrolle (9) an der ersten Seite der Schiene (6) sowie die zweite Umlenkrolle (8) und die vierte Umlenkrolle (10) an der zweiten Seite der Schiene (6) jeweils koaxial angeordnet sind.

10. Antriebssystem (1) nach Anspruch 9, **dadurch gekennzeichnet, dass** die erste Umlenkrolle (7) und die dritte Umlenkrolle (9) sowie die zweite Umlenkrolle (8) und die vierte Umlenkrolle (10) jeweils unabhängig voneinander drehbar gelagert sind.

11. Antriebssystem (1) nach einem der Ansprüche 1 bis 10, **dadurch gekennzeichnet, dass** Umfänge der dritten Umlenkrolle (9) und der vierten Umlenkrolle (10) über die Schiene (6) und die stationäre Komponente (5) hinausragen.

12. Antriebssystem (1) nach einem der Ansprüche 1 bis 11, **dadurch gekennzeichnet, dass** die erste Umlenkrolle (7) und die zweite Umlenkrolle (8) mit einem kleineren Umfang als die dritte Umlenkrolle (9) und die vierte Umlenkrolle (10) ausgebildet sind.

13. Antriebssystem (1) nach einem der Ansprüche 3 bis 12, **dadurch gekennzeichnet, dass** die stationäre Komponente (5) ein Spannelement (21) aufweist, mit dem die Spannung des zweiten Zugmittels (18) einstellbar ist.

14. Antriebssystem (1) nach Anspruch 13, **dadurch gekennzeichnet, dass** die stationäre Komponente (5) einen Schlitten (20) aufweist, wobei zumindest ein Ende des zweiten Zugmittels (18) an dem Schlitten (20) angebracht ist und wobei neben der Spannung des zweiten Zugmittels (18) auch die Position des Schlittens (20) über das Spannelement (21) einstellbar ist, wobei eine Aufhängung der ersten Spannrolle (16) derart an dem Schlitten (20) angeordnet ist, dass über die Position des Schlittens (20) die Position der ersten Spannrolle (16) einstellbar ist, wobei dadurch der Anpressdruck des ersten Zugmittels (11) auf die Abtriebswelle (14) einstellbar ist und dadurch das Spiel des ersten Zugmittels (11) und des zweiten Zugmittels (18) reduzierbar ist.

15. Antriebssystem (1) nach einem der Ansprüche 1 bis 14, **dadurch gekennzeichnet, dass** ein Kopplungselement (19) an dem zweiten Zugmittel (18) angebracht ist, das mit der linear bewegten ausziehbaren Möbelkomponente (3) koppelbar ist.

## Claims

1. Drive system (1) for a linearly movable extendable furniture component (3) of a piece of furniture (2), in particular for an extendable drawer of a pharmacy cabinet, the drive system (1) comprising a stationary component (5) which can be fastened to the piece of furniture (2), a drive motor (12) and a rail (6) which is linearly movable relative to the stationary component (5) in a extension direction (4) and which has a rotatably mounted first guide roller (7) on a first side of the rail (6) and a rotatably mounted second guide roller (8) on a second side of the rail (6), wherein a first pulling means (11) which is fastened to the stationary component (5) is placed around the first guide roller (7) and the second guide roller (8) and is in contact with an output shaft (14) which can be driven by the drive motor (12) in such a way that the rail (6) can be moved in the extension direction (4) by the drive motor (12), **characterized in that** the drive motor (12) is fastened to the stationary component (5) and the rail (6) has a rotatably mounted third guide roller (9) on the first side and a rotatably mounted fourth guide roller (10) on the second side, around which a second pulling means (18) is arranged in such a way that a movement of the rail (6) in the extension direction (4) causes a movement of the second pulling means (18) relative to the rail (6) in the extension direction (4), wherein the second pulling means (18) is couplable to the linearly movable extendable furniture component (3).

2. Drive system (1) according to claim 1, **characterized in that** the first guide roller (7) is rotatably mounted at the end of the first side of the rail (6) and/or the second guide roller (8) is rotatably mounted at the end of the second side of the rail (6) and/or the third guide roller (9) is rotatably mounted at the end of the first side of the rail (6) and/or the fourth guide roller (10) is rotatably mounted at the end of the second side of the rail (6).

3. Drive system (1) according to claim 1 or 2, **characterized in that** the second pulling means (18) is attached to the stationary component (5).

4. Drive system (1) according to claim 1 to 3, **characterized in that** at least one rotatably mounted first tensioning roller (16) is arranged on the stationary component (5) next to the output shaft (14), the first pulling means (11) being placed around the first tensioning roller (16) and the output shaft (14) in such a way that the movement of the output shaft (14) can be transmitted to the first pulling means (11) without slippage.

5. Drive system (1) according to claim 3, **characterized in that** the position of the first tensioning roller (16) relative to the output shaft (14) is adjustable.

6. Drive system (1) according to claim 4 or 5, **characterized in that**, in addition to the first tensioning roller (16), a rotatably mounted second tensioning roller (17) is arranged on the stationary component (5), the first pulling means (11) being arranged in a loop along the first tensioning roller (16), around the output shaft (14) and along the second tensioning roller (17).

7. Drive system (1) according to one of claims 1 to 6, **characterized in that** the output shaft (14) is driven by the drive motor (12) via a gearbox (13), the drive motor (12) being an electric motor.

8. Drive system (1) according to one of claims 1 to 7, **characterized in that** the first pulling means (11) is a toothed belt and the output shaft (14) has a toothed wheel (15), the toothed belt engaging with the toothed wheel (15).

9. Drive system (1) according to one of claims 1 to 8, **characterized in that** the first guide roller (7) and the third guide roller (9) are arranged coaxially on the first side of the rail (6) and the second guide roller (8) and the fourth guide roller (10) are arranged coaxially on the second side of the rail (6).

10. Drive system (1) according to claim 9, **characterized in that** the first guide roller (7) and the third guide roller (9) as well as the second guide roller (8) and the fourth guide roller (10) are each rotatably mounted independently of one another.

11. Drive system (1) according to one of claims 1 to 10, **characterized in that** circumferences of the third guide roller (9) and the fourth guide roller (10) project beyond the rail (6) and the stationary component (5).

12. Drive system (1) according to one of claims 1 to 11, **characterized in that** the first guide roller (7) and the second guide roller (8) are designed with a smaller circumference than the third guide roller (9) and the fourth guide roller (10).

13. Drive system (1) according to one of claims 3 to 12, **characterized in that** the stationary component (5) has a tensioning element (21) with which the tension of the second pulling means (18) can be adjusted.

14. Drive system (1) according to claim 13, **characterized in that** the stationary component (5) has a carriage (20), at least one end of the second pulling means (18) being attached to the carriage (20) and, in addition to the tension of the second pulling means (18), the position of the carriage (20) also being adjustable via the tensioning element (21), wherein a suspension of the first tensioning roller (16) is arranged on the carriage (20) in such a way that the position of the first tensioning roller (16) can be adjusted via the position of the carriage (20), wherein the contact pressure of the first pulling means (11) on the output shaft (14) can thereby be adjusted and the play of the first pulling means (11) and the second pulling means (18) can thereby be reduced.

15. Drive system (1) according to one of claims 1 to 14, **characterized in that** a coupling element (19) is attached to the second pulling means (18), which can be coupled to the linearly movable extendable furniture component (3).

## Revendications

1. Système d'entraînement (1) pour un composant de meuble (3) extractible, pouvant être linéairement déplacé, d'un meuble (2), en particulier pour un tiroir extractible d'une armoire à pharmacie, le système d'entraînement (1) comprenant un composant stationnaire (5) qui peut être fixé au meuble (2), un moteur d'entraînement (12) et un rail (6) mobile linéairement par rapport au composant stationnaire (5) dans une direction d'extraction (4), qui présente sur un premier côté du rail (6) une première poulie de renvoi (7) logée de manière rotative et sur un deuxième côté du rail (6) une deuxième poulie de renvoi (8) logée de manière rotative, un premier moyen de traction (11), qui est fixé au composant stationnaire (5), est placé autour de la première poulie de renvoi (7) et de la deuxième poulie de renvoi (8) et est en contact avec un arbre de sortie (14) pouvant être entraîné par le moteur d'entraînement (12) de telle sorte que le rail (6) peut être déplacé dans la direction d'extraction (4) par le moteur d'entraînement (12), **caractérisé en ce que** le moteur d'entraînement (12) est fixé au composant stationnaire (5) et que le rail (6) présente sur le premier côté une troisième poulie de renvoi (9) logée de manière rotative et sur le deuxième côté une quatrième poulie de renvoi (10) logée de manière rotative, autour duquel est disposé un deuxième moyen de traction (18) de telle sorte qu'un mouvement du rail (6) dans la direction d'extraction (4) conditionne un mouvement du deuxième moyen de traction (18) par rapport au rail (6) dans la direction d'extraction (4), le deuxième moyen de traction (18) pouvant être accouplé au composant de meuble extractible (3) pouvant être linéairement déplacé.

2. Système d'entraînement (1) selon la revendication 1, **caractérisé en ce que** la première poulie de renvoi (7) est montée rotative à l'extrémité du premier côté du rail (6) et/ou que la deuxième poulie de renvoi (8) est montée rotative à l'extrémité du deuxième côté du rail (6) et/ou que la troisième poulie de renvoi (9) est montée rotative à l'extrémité du premier côté du rail (6) et/ou que la quatrième poulie de renvoi (10) est montée rotative à l'extrémité du deuxième côté du rail (6).

3. Système d'entraînement (1) selon la revendication 1 ou 2, **caractérisé en ce que** le deuxième moyen de traction (18) est fixé au composant stationnaire (5).

4. Système d'entraînement (1) selon les revendications 1 à 3, **caractérisé en ce que**, outre l'arbre de sortie (14), au moins un premier galet tendeur (16) monté rotatif est disposé sur le composant stationnaire (5), le premier moyen de traction (11) étant placé autour du premier galet tendeur (16) et de l'arbre de sortie (14) de telle sorte que le mouvement de l'arbre de sortie (14) peut être transmis sans glissement au premier moyen de traction (11).

5. Système d'entraînement (1) selon la revendication 3, **caractérisé en ce que** la position du premier galet tendeur (16) par rapport à l'arbre de sortie (14) est réglable.

6. Système d'entraînement (1) selon la revendication 4 ou 5, **caractérisé en ce que**, outre le premier galet tendeur (16), un deuxième galet tendeur (17) monté rotatif est disposé sur le composant stationnaire (5), le premier moyen de traction (11) étant disposé en forme de boucle le long du premier galet tendeur (16), autour de l'arbre de sortie (14) et le long du deuxième galet tendeur (17).

7. Système d'entraînement (1) selon l'une des revendications 1 à 6, **caractérisé en ce que** l'arbre de sortie (14) est entraîné par le moteur d'entraînement (12) par l'intermédiaire d'un engrenage (13), le moteur d'entraînement (12) étant un moteur électrique.

8. Système d'entraînement (1) selon l'une des revendications 1 à 7, **caractérisé en ce que** le premier moyen de traction (11) est une courroie crantée et que l'arbre de sortie (14) comprend une roue dentée (15), la courroie crantée étant en prise avec la roue dentée (15).

9. Système d'entraînement (1) selon l'une des revendications 1 à 8, **caractérisé en ce que** la première poulie de renvoi (7) et la troisième poulie de renvoi (9) sont disposées coaxialement sur le premier côté du rail (6), et que la deuxième poulie de renvoi (8) et la quatrième poulie de renvoi (10) sont disposées coaxialement sur le deuxième côté du rail (6).

10. Système d'entraînement (1) selon la revendication 9, **caractérisé en ce que** la première poulie de renvoi (7) et la troisième poulie de renvoi (9) ainsi que la deuxième poulie de renvoi (8) et la quatrième poulie de renvoi (10) sont respectivement montées de manière à pouvoir tourner indépendamment l'une de l'autre.

11. Système d'entraînement (1) selon l'une des revendications 1 à 10, **caractérisé en ce que** des circonférences de la troisième poulie de renvoi (9) et de la quatrième poulie de renvoi (10) dépassent du rail (6) et du composant stationnaire (5).

12. Système d'entraînement (1) selon l'une des revendications 1 à 11, **caractérisé en ce que** la première poulie de renvoi (7) et la deuxième poulie de renvoi (8) sont formées avec une circonférence plus petite que la troisième poulie de renvoi (9) et la quatrième poulie de renvoi (10).

13. Système d'entraînement (1) selon l'une des revendications 3 à 12, **caractérisé en ce que** le composant stationnaire (5) comporte un élément de tension (21) permettant de régler la tension du deuxième moyen de traction (18).

14. Système d'entraînement (1) selon la revendication 13, **caractérisé en ce que** le composant stationnaire (5) présente un chariot (20), au moins une extrémité du deuxième moyen de traction (18) étant montée sur le chariot (20) et, outre la tension du deuxième moyen de traction (18), la position du chariot (20) peut également être réglée par l'intermédiaire de l'élément de tension (21), une suspension du premier galet tendeur (16) étant disposée sur le chariot (20) de telle sorte que la position du premier galet tendeur (16) peut être réglée par l'intermédiaire de la position du chariot (20), la pression d'application du premier moyen de traction (11) sur l'arbre de sortie (14) étant ainsi réglable et le jeu du premier moyen de traction (11) et du deuxième moyen de traction (18) pouvant ainsi être réduit.

15. Système d'entraînement (1) selon l'une quelconque des revendications 1 à 14, **caractérisé en ce qu'**un élément d'accouplement (19) est monté sur le deuxième moyen de traction (18), lequel peut être accouplé au composant de meuble extensible (3) pouvant être linéairement déplacé.
